Europäisches Patentamt

European Patent Office

Office européen des brevets

(19)

(11) Publication number: 0 376 690
A1

# (12) EUROPEAN PATENT APPLICATION

(21) Application number: 89313603.6

(22) Date of filing: 27.12.89

(51) Int. Cl.5: C04B 33/04, C04B 33/13, C04B 18/02

(30) Priority: 28.12.88 JP 329219/88

(43) Date of publication of application:
04.07.90 Bulletin 90/27

(84) Designated Contracting States:
CH DE ES FR GB IT LI SE

(71) Applicant: SHIN NIPPON HEAT PROCESSING
CO. LTD.
889-1 Isohara Isohara-Machi
Kita-Ibaraki-Shi Ibaraki-Ken 319-15(JP)

(72) Inventor: Shibata, Tomohiko
1241-9 Kisara Isohara-Machi
Kita-Ibaraki-shi Ibaraki-Ken 319-15(JP)
Inventor: Ishii, Toshiaki
900-3 Ishioka Nakago-Machi
Kita-Ibaraki-shi Ibaraki-Ken 319-15(JP)
Inventor: Yabuki, Kesayoshi
865-3 Ishioka Nakago-Machi
Kita-Ibaraki-shi Ibaraki-Ken 319-15(JP)
Inventor: Taniguchi, Nobuyuki
1-5-10 Tyo ,Nishiki-Machi
Iwaki-Shi Fukushima-Ken(JP)

(74) Representative: Gura, Henry Alan et al
MEWBURN ELLIS 2 Cursitor Street
London EC4A 1BO(GB)

(54) Fired product utilizing incineration ash and method of production thereof.

(57) A fired product utilizing incineration ash is provided. An ash obtained by incinerating waste is mixed with a clay in the ratio 5:95 - 95:5 by weight. A method of producing a fired product utilizing an incineration ash is also provided. The method includes, in combination, a mixing step for refining and mixing the ash obtained by incinerating waste with a clay to obtain a stock material, a molding step for molding the stock material by pressing to obtain a molded product or granulating the stock material by extrusion to obtain a granulated product; a drying and firing step for drying and firing the molded product or the granulated product to obtain a fired product; and a grinding step for finely grinding the fired product obtained in the drying and firing step.

EP 0 376 690 A1

FIG. 1

CLAY　　　　　　INCINERATION ASH

PRETREATMENT SCREENING — { SIEVE / ROLL CRUSHER / COMPOUNDING AND FEEDING MACHINE

[ i ] MIXING STEP

MIXING

$b_1$ :UNDERWATER MIXING ········· { UNDERWATER STIRRING AND MIXING MACHINE / SLURRY STORAGE TANK / DEHYDRATOR / PUMP

$b_2$ :WET MIXING ········· { PUG MILL OR SCREEN FEEDER / KNEADING MACHINE

[ ii ] MOLDING STEP

$b_3$ :DRY MIXING ········· { DRIER / GRINDER / PUG MILL OR KNEADING MACHINE

MOLDING OR GRANULATING A　　　GRANULATING B

a :SEMI-DRY MOLDING ········· HIGH-PRESSURE PRESS AND METAL MOLD
b :WET MOLDING ········· KNEADER OR LOW-PRESSURE PRESS
c,d:GRANULATING A,B ········· DRUM GRANULATOR / PAN GRANULATOR

DRYING

UTILIZATION OF WASTE HEAT OF BURNER

[ iii ] DRYING AND FIRING STEP

FIRING

$a_1$ :TUNNEL KILN
$a_2$ :ROTARY KILN

[ iv ] GRINDING STEP

GRINDING

JAW CRUSHER
IMPACT CRUSHER
CAGE MILL
FREE CRUSHING MACHINE
FRET MILL
IRON MILL, TUBE MILL

FIRED PRODUCT　　　FIRED PRODUCT

MOLDED　　　GRANULATED

# FIRED PRODUCT UTILIZING INCINERATION ASH AND METHOD OF PRODUCTION THEREOF

The present invention relates to a technique of recycling ash obtained by incinerating waste such as municipal waste, and more particularly to a fired product utilizing such an incineration ash and also to a method of producing the fired product.

It is known that a technique of producing a fired product from a mixture of a clay with ash (fly ash) discharged from a combustion furnace or the like employing coal as a fuel can be applied to a raw material for a ceramic roof tile in a test stage or a trial production stage if a mixing ratio of the ash is about 5%, for example. However, a technique of producing a fired product from a mixture of a clay with incineration ash obtained from waste such as a municipal waste has not yet been realised.

The disposal of general waste such as municipal waste as associated with improvements in the standard of living constitutes a serious public problem, and incineration ash from such waste is disposed of for landfill at present. However, the difficulty of securing landfill sites has increased year by year. Although a method of melting the incineration ash itself has been investigated, it has not achieved a practically useful technique. Thus, developments and research concerning effective utilization of this kind of waste are urgently demanded from the social viewpoint.

According to one aspect of the present invention, there is provided a fired product utilizing incineration ash, characterised in that a mixing ratio by weight of said ash obtained by incinerating a waste is mixed with a clay in a ratio of 5:95 - 95:5 by weight.

According to another aspect of the invention, there is provided a method of producing a fired product utilizing incineration ash, said method comprising in combination,

[i] a mixing step for refining and mixing said ash obtained by incinerating a waste with a clay to obtain a stock material;

[ii] a molding step for molding said stock material under pressure to obtain a molded product or granulating said stock material, eg. by extrusion, to obtain a granulated product;

[iii] a drying and firing step for drying and firing said molded product or said granulated product to obtain a fired product; and

[iv] a grinding step for finely grinding said fired product obtained in said drying and firing step.

Depending on its composition, the final fired product may be coloured yellowish light brown or reddish brown, and has the properties of water permeability, corrosion resistance and fire resistance. The final fired product is obtained in the form of moldings or granules.

Other features of the invention will be more fully understood from the following detailed description of examples of the invention with reference to the accompanying drawings, in which:

Fig. 1 is a block diagram showing each step of a method of production of the fired product utilizing incineration ash according to the present invention;

Fig. 2 is a table showing the results of analysis of the components constituting the materials for the stock material and the fired products in the method of production of Fig. 1;

Fig. 3A is a table showing the result of a hazardous substance dissolution test for incineration ash used in the method of production;

Fig. 3B is a table similar to Fig. 3A, showing the result of the above-mentioned test for the soft clay used in the method of production;

Fig. 3C is a table similar to Fig. 3A, showing the result of the above-mentioned test for the fired product with a 50% clay content; and

Fig. 3D is a table similar to Fig. 3A, showing the result of the above-mentioned test for the fired product with a clay content of 80%.

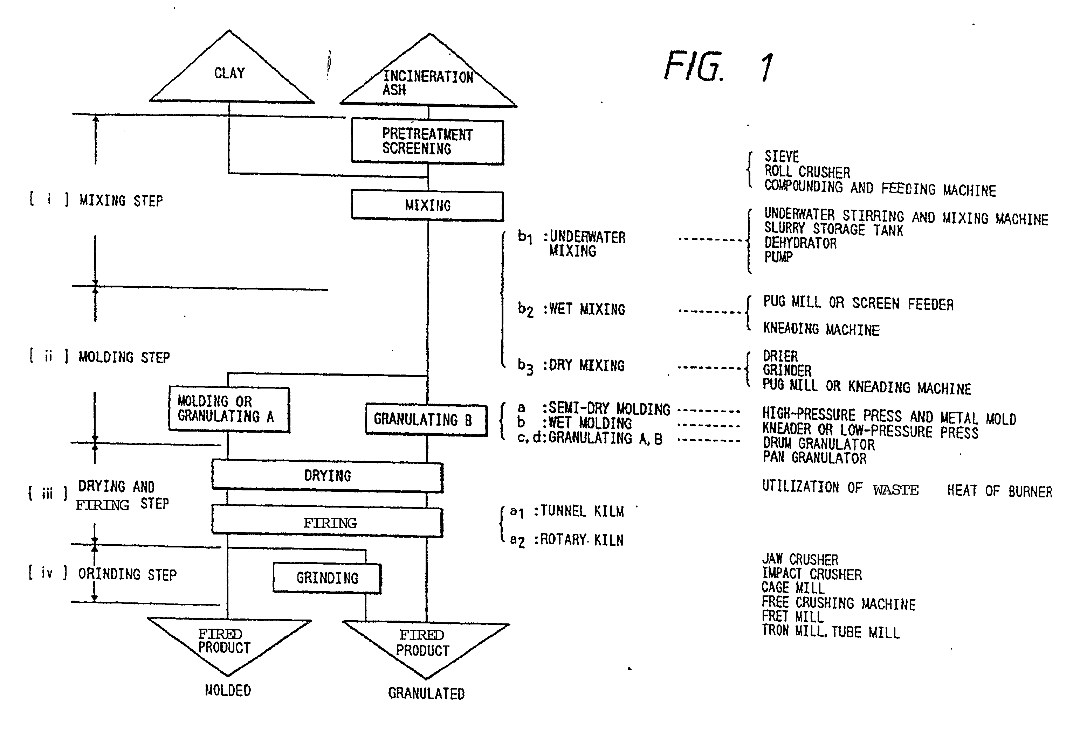

A preferred embodiment of the present invention will now be described with reference to the drawings. Fig. 1 is a block diagram showing each step of a method of obtaining a fired product utilizing incineration ash. Each step will be described in detail with reference to Fig. 1.

## [i] Mixing Step

### a. Pretreatment Screening

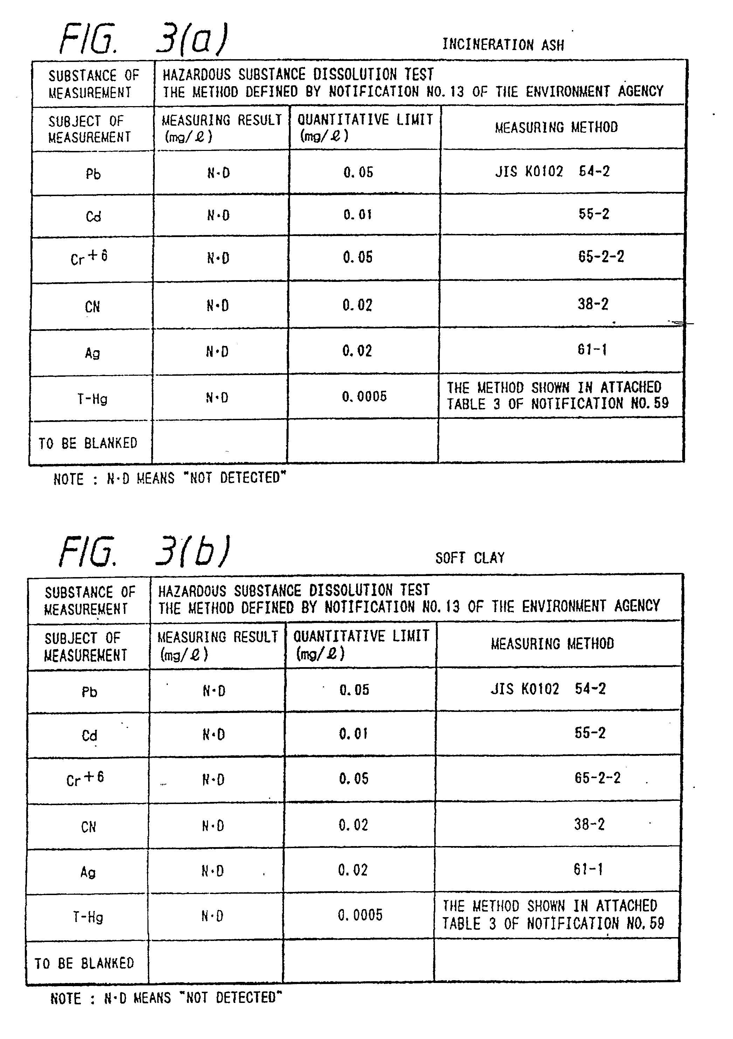

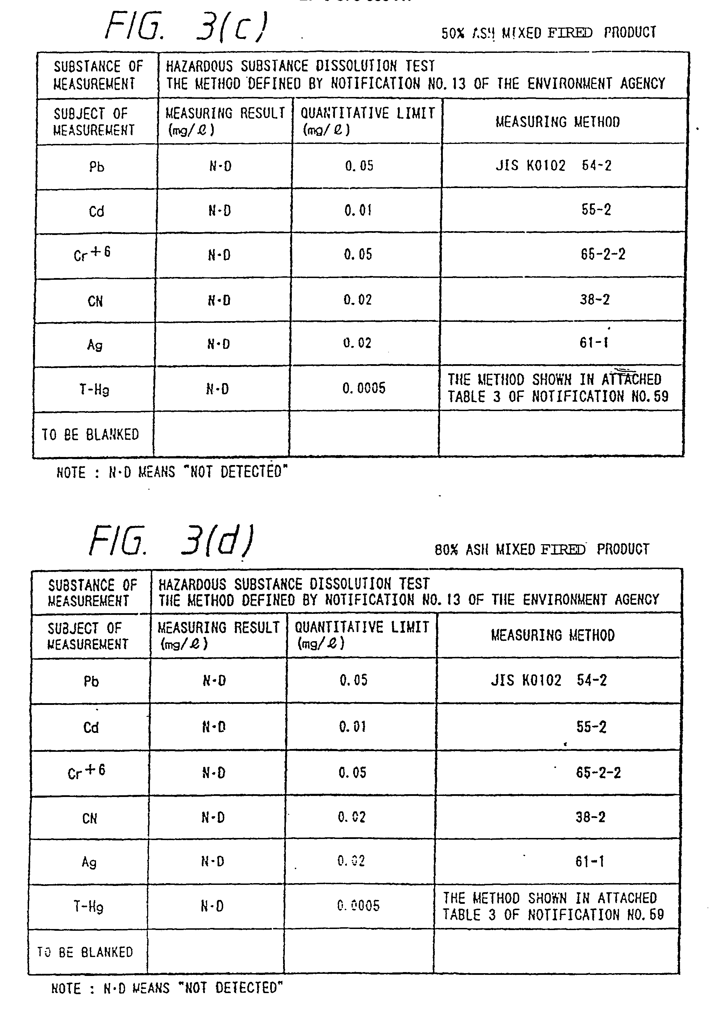

While incineration ash from general waste such as municipal waste is usually utilized for landfill, it will normally be necessary to carry out pretreatment screening of the ash used in the invention since if it is to be recycled as a corrosion-resisting and fire-resisting material. Figs. 3A to 3D show the results of a hazardous substance dissolution test by (K.K.) Kankyo Kagaku Kenkyusho according to the method defined by Notification No. 13 of the Environment Agency (of Japan). As shown in Fig. 3A, the incineration ash to be recycled has been determined to be non-toxic as a result of the test. The ash has various grain sizes ranging from a pebble size as the larger to a size of a grain of sand as the smaller. Further, the ash contains many unincinerated impurities. Therefore, the ash is sieved to screen off metal and impurities unincinerated. As required, a coarse mass in the ash is crushed to adjust the grain size to about 2 mm or less in diameter by using a crushing machine such as a roll crusher. According to the result of the test conducted by the inventors, the proportion of the incineration ash to clay can be increased to about 95:5. Furthermore, the colour tone of the fired product to be obtained can be changed from a yellowish light brown to a reddish brown by changing the mixture weight ratio of the ash to the clay. Additionally, it was also found that the whiteness of the fired product can be increased with an increase in the proportion of ash and with a decrease in the ash grain size. The equipment required for the pretreatment screening include a sieve, roll crusher and compounding feeder to be used in quantitative feeding of the ash.

b. Mixing

This is a process for uniformly mixing the incineration ash obtained in the above-mentioned pretreatment screening step with a clay in a predetermined ratio. The clay to be used is one determined to be non-toxic as the result of the hazardous substance dissolution test according to the method defined by Notification No. 13 of the Environment Agency as shown in Fig. 3B. This process is an important step particularly in case of increasing the proportion of the incineration ash to the clay. The most suitable one of the following three systems may be selected according to a manner of the fired product to be obtained.

(b1) Underwater Mixing System

This system includes the steps of uniformly mixing the incineration ash with the clay in water and then dehydrating the mixture. By using a tron mill, a superfine powder of the ash can be obtained, and uniform mixing can be ensured to thereby increase the mixing ratio of the ash. However, equipment for subsequent dehydration is necessary, and the equipment cost is accordingly higher than that in a wet mixing system which will be hereinafter described. The necessary equipment for the underwater mixing system includes, for example, an underwater stirring and mixing machine (or tron mill), slurry storage tank, dehydrator, pump, etc.

(b2) Wet Mixing System

The incineration ash and the clay are mixed with each other and kneaded in the presence of 15-30% water by using a kneading machine such as a pug mill or screen feeder. While the structure of this system is simple and an equipment cost is low, it is hard to mix uniformly the ash with the clay when increasing the mixture ratio of ash to clay. Further, when an elutriated clay is used as the clay to be mixed, a refining process is not required. However, in case of using a natural mined clay, a refining process must be carried out. Therefore, it is necessary to first choose a mixing system in consideration of the kind of the clay to be actually mixed. The necessary equipment for the wet mixing system includes, for example, a pug mill or screen feeder, a kneading machine, etc.

(b3) Dry Mixing System

This system includes the steps of drying the incineration ash and the clay, grinding the same to obtain fine powders, and then mixing these powders with each other by the means similar to the above-mentioned wet mixing system. In the mixing step, it is preferable to add a small amount of water. Since uniform mixing can be ensured, the mixture ratio of the ash to the clay can be increased. However, a drier and a grinder are additionally required in comparison with the above-mentioned wet mixing system, resulting in an increase in equipment cost. The necessary equipment for the dry mixing system includes, for example, a drier, grinder and pug mill or kneading machine.

[ii] Molding or Granulating Step

The molding or granulating step is provided for forming the mixture of the incineration ash and the clay (which will be hereinafter referred to as the stock material) obtained in the above-mentioned mixing step, into an appropriate shape by a suitable means according with each of the following drying, firing and grinding steps. That is, different methods may be provided for different manners of each step of drying, firing and grinding as well as different fired products. A suitable one of the following four kinds of forming methods is preferably selected according to the object.

(a) Semi-dry Molding

The stock material containing a low percentage of water is molded by using a metal mold and a high-pressure press. This method is suitable for molding of stock material with a low percentage of water or clay owing to high-pressure molding. Accordingly, the mixture ratio of the incineration ash can be increased, and the subsequent drying step can be easily carried out to contribute to a reduction in fuel cost. On the other hand, as the high-pressure press and the metal mold are required, the equipment cost is higher than that in a wet molding process to be described hereinafter. The production cost may be reduced as a whole by increasing the mixture ratio of the ash. The necessary equipment includes a high-pressure press.

(b) Wet Molding

The stock material is extrusion-molded by using a kneader. In some circumstances, it may be press-molded by using a low-pressure press. On kneading and extruding the stock material, it is cut to obtain the moldings. Accordingly, the shape of the moldings can be freely selected, and a large processing capacity can be achieved. As compared with the above-mentioned semi-dry molding process, the number of steps can be reduced, and the equipment cost can also be relatively reduced. On the other hand, since the moisture in the stock material is more than that in the semi-dry molding process, more drying time is required which results in an increase in fuel cost. The necessary equipment includes a kneader or low-pressure press.

(c) Granulating A

This process includes the steps of granulating the stock material to a particle size of about 15-70mm by using a granulator, firing the granules obtained and then finely grinding the fired product by using a grinder. In this process, it may be considered that the granulator is substituted for the extruder to be used in the above-mentioned wet molding process (b). The necessary equipment includes a granulator to be described hereinafter.

(d) Granulating B

This process includes the steps of granulating the stock material to a particle size of 3 mm or less by using a granulator and firing the fine granules obtained. In comparison with the above-mentioned processes (a), (b) and (c) requiring a grinding step to be selected according to product applications after the drying step, this process (d) does not require the grinding step since the fine granulation is carried out before the firing step. As the grinding step requires an additional equipment cost for safety and sanitation in an actual working situation, this step is undesirable from the viewpoint of equipment and control, and it is therefore preferable to omit this step. In the case of adopting the granulating process B, it is preferable to grind the stock material in the mixing step to a particle size of about 0.5 mm at the maximum. Accordingly, a grinding step using a tron mill, vibration mill, etc. is required giving an increase in equipment cost and difficulty in increasing processing capacity. Examples of the granulator to be used are as follows:

(1) Drum Granulator

The stock material is fed into an upper end of a rotary inclined drum, and water is sprayed near the inlet in the drum to granulate the material. The granular product is continuously discharged from the lower end of the drum.

(2) Pan Granulator

The stock material is fed into a rotary inclined disc-shaped pan, and water is sprayed to granulate the material. The granular product is discharged from an upper edge of the pan. The grain size of the granular product can be changed by selecting the angle of rotary vanes and granulating vanes and the rotating speed of the pan. The grain size can be made more uniform owing to a classification effect as compared with the drum granulator.

The granular product to be obtained by the above-mentioned granulators tends to be affected by various factors including a quantity of the stock material to be supplied, the rotating speed of the pan or the drum, the depth of the pan, the angle of inclination, the quantity of the water to be added, and the spraying position of the water. Particularly, a satisfactory granular product can be obtained when the grain size of the stock material is very small and the moisture is properly added to provide a moderate plasticity.

[iii] Drying and Firing Step

The moldings or granules of the stock material are dried, and then fired at about 1150°C. If circumstances require, the drying step and the firing step may be carried out simultaneously. This process is generally classified into a continuous process and a batch process. A batch kiln in the batch process has a problem from the point of view of processing capacity and cost, and an explanation thereof will be omitted accordingly.

## a. Continuous Process

### a1. Tunnel Kiln

The drying step is carried out by utilizing waste heat from the tunnel kiln. The moldings or granules are loaded onto a firing truck having a free shape, and the truck is driven through the tunnel kiln, thus firing the material to obtain a fired product. Alternatively, as shown in Fig. 1, the subsequent grinding step may be carried out to grind the fired product, so as to obtain a granular fired product.

### a2. Rotary Kiln

The drying step is carried out by utilizing waste heat from the rotary kiln. The material in the form of coarse grains is fired in an inclined rotary cylindrical kiln, and is then ground to obtain a granular fired product.

### [iv] Grinding Step

The grinding step is an important step for the purpose of forming a granular product having a crushed surface. The grinder to be used in the grinding step has a decisive influence upon grain size and properties of the product, and a suitable one of the following grinders should be selected in consideration of the respective mechanical characteristics as mentioned above.

### a. Jaw Crusher

For coarse crushing; to be utilized as a primary crusher.

### b. Impact Crusher

For secondary crushing; having a large capacity unless fine crushing is carried out.

### c. Cage Mill

For fine grinding; having a medium capacity for fine grinding.

### d. Free Crushing Machine

For fine grinding; having a small capacity for fine grinding.

### e. Fret Mill

For secondary and fine grinding; having a small capacity, while providing a round crushed surface.

### f. Tron Mill; Tube Mill

For superfine grinding; capable of mixing raw material, and having a small capacity.

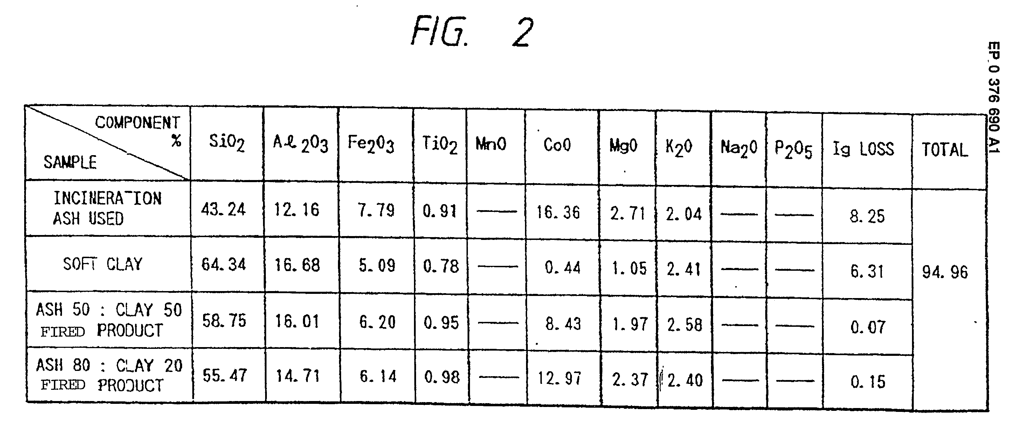

Thus, there has been described the primary steps relating to a method of producing the fired product utilizing incineration ash according to the present invention, and there has also been described examples of the equipment to be required for carrying out the method. As shown in Fig. 1, the present invention is achieved by combining these primary steps, and suitable selection and combination may be made according to the kind, properties and the like of the product. Fig. 2 shows the result of analysis of the components constituting the materials for the stock material and the fired product in examples according to the present invention.

The fired product may be employed for various purposes such as roofing material for a roof tile, etc. and construction material. For instance, the granular or crushed product may be used for roadbed materials, raw materials for water-permeable bricks, blocks and tiles, water-permeable paving materials, and filter materials. Further, by mixing the fired product obtained through the molding, firing and crushing steps with the fired product obtained through the granulating and firing steps to form a new fired product containing pores between the grains in the mixture, a product may be obtained for use, for example, as pavement materials affording reduced shock, wall materials affording a soft feeling, and sound insulating materials.

Furthermore, the colour tone of the fired product can be changed by changing the proportion of the incineration ash as mentioned previously. For example, when the proportion is about 30%, the colour tone may be adjusted to a reddish light brown by the firing step, while when the proportion is about 50%, the colour tone may be adjusted to a yellowish brown affected by the existence of Ca and Ti in the ash, or a reddish brown affected by the existence of Fe in the ash. Accordingly, such coloured products are useful for parkway materials which are naturally coloured without using a paint or the like. The molded fired product may be applied to a simple decorative brick, floor ceramic board, etc. Further, as apparent from Figs. 3C and 3D, the fired product can be established as non-toxic from the result of the hazardous substance dissolution test according to the method defined by Notification No. 13 of the Environment Agency (of Japan).

While the invention has been described with reference to specific embodiments, the description is illustrative and is not to be construed as limiting the scope of the invention. Various modifications and changes may occur to those skilled in the art without departing from the scope of the invention.

## Claims

1. A fired product utilizing incineration ash, characterised in that a mixing ratio by weight of said ash obtained by incinerating waste is mixed with clay in a ratio 5:95 - 95:5 by weight.

2. A method of producing a fired product utilizing incineration ash, said method comprising:

[i] a mixing step for refining and mixing said ash obtained by incinerating waste with clay to obtain a stock material;

[ii] a step for molding said stock material by pressing to obtain a molded product or for granulating said stock material, eg. by extrusion, to obtain a granulated product;

[iii] a drying and firing step for drying and firing said molded or granulated product to obtain a fired product; and

[iv] a grinding step for grinding said fired product obtained in said drying and firing step.

# FIG. 1

[ i ] MIXING STEP

[ ii ] MOLDING STEP

[ iii ] DRYING AND FIRING STEP

[ iv ] GRINDING STEP

CLAY

INCINERATION ASH

PRETREATMENT SCREENING — { SIEVE, ROLL CRUSHER, COMPOUNDING AND FEEDING MACHINE

MIXING

$b_1$ :UNDERWATER MIXING ---- { UNDERWATER STIRRING AND MIXING MACHINE, SLURRY STORAGE TANK, DEHYDRATOR, PUMP

$b_2$ :WET MIXING ---- { PUG MILL OR SCREEN FEEDER, KNEADING MACHINE

$b_3$ :DRY MIXING ---- { DRIER, GRINDER, PUG MILL OR KNEADING MACHINE

MOLDING OR GRANULATING A

GRANULATING B

a :SEMI-DRY MOLDING ---- HIGH-PRESSURE PRESS AND METAL MOLD
b :WET MOLDING ---- KNEADER OR LOW-PRESSURE PRESS
c, d:GRANULATING A, B ---- DRUM GRANULATOR, PAN GRANULATOR

DRYING — UTILIZATION OF WASTE HEAT OF BURNER

FIRING — { $a_1$ :TUNNEL KILM, $a_2$ :ROTARY KILN

GRINDING — JAW CRUSHER, IMPACT CRUSHER, CAGE MILL, FREE CRUSHING MACHINE, FRET MILL, TRON MILL, TUBE MILL

FIRED PRODUCT — MOLDED

FIRED PRODUCT — GRANULATED

EP 0 376 690 A1

## FIG. 2

| COMPONENT %<br>SAMPLE | $SiO_2$ | $Al_2O_3$ | $Fe_2O_3$ | $TiO_2$ | MnO | CoO | MgO | $K_2O$ | $Na_2O$ | $P_2O_5$ | Ig LOSS | TOTAL |
|---|---|---|---|---|---|---|---|---|---|---|---|---|
| INCINERATION ASH USED | 43.24 | 12.16 | 7.79 | 0.91 | ——— | 16.36 | 2.71 | 2.04 | ——— | ——— | 8.25 | |
| SOFT CLAY | 64.34 | 16.68 | 5.09 | 0.78 | ——— | 0.44 | 1.05 | 2.41 | ——— | ——— | 6.31 | 94.96 |
| ASH 50 : CLAY 50 FIRED PRODUCT | 58.75 | 16.01 | 6.20 | 0.95 | ——— | 8.43 | 1.97 | 2.58 | ——— | ——— | 0.07 | |
| ASH 80 : CLAY 20 FIRED PRODUCT | 55.47 | 14.71 | 6.14 | 0.98 | ——— | 12.97 | 2.37 | 2.40 | ——— | ——— | 0.15 | |

EP 0 376 690 A1

## FIG. 3(a)

INCINERATION ASH

| SUBSTANCE OF MEASUREMENT | HAZARDOUS SUBSTANCE DISSOLUTION TEST THE METHOD DEFINED BY NOTIFICATION NO.13 OF THE ENVIRONMENT AGENCY | | |
|---|---|---|---|
| SUBJECT OF MEASUREMENT | MEASURING RESULT (mg/ℓ) | QUANTITATIVE LIMIT (mg/ℓ) | MEASURING METHOD |
| Pb | N·D | 0.05 | JIS K0102   54-2 |
| Cd | N·D | 0.01 | 55-2 |
| Cr $^{+6}$ | N·D | 0.05 | 65-2-2 |
| CN | N·D | 0.02 | 38-2 |
| Ag | N·D | 0.02 | 61-1 |
| T-Hg | N·D | 0.0005 | THE METHOD SHOWN IN ATTACHED TABLE 3 OF NOTIFICATION NO.59 |
| TO BE BLANKED | | | |

NOTE : N·D MEANS "NOT DETECTED"

## FIG. 3(b)

SOFT CLAY

| SUBSTANCE OF MEASUREMENT | HAZARDOUS SUBSTANCE DISSOLUTION TEST THE METHOD DEFINED BY NOTIFICATION NO.13 OF THE ENVIRONMENT AGENCY | | |
|---|---|---|---|
| SUBJECT OF MEASUREMENT | MEASURING RESULT (mg/ℓ) | QUANTITATIVE LIMIT (mg/ℓ) | MEASURING METHOD |
| Pb | N·D | 0.05 | JIS K0102   54-2 |
| Cd | N·D | 0.01 | 55-2 |
| Cr $^{+6}$ | N·D | 0.05 | 65-2-2 |
| CN | N·D | 0.02 | 38-2 |
| Ag | N·D | 0.02 | 61-1 |
| T-Hg | N·D | 0.0005 | THE METHOD SHOWN IN ATTACHED TABLE 3 OF NOTIFICATION NO.59 |
| TO BE BLANKED | | | |

NOTE : N·D MEANS "NOT DETECTED"

## FIG. 3(c)

50% ASH MIXED FIRED PRODUCT

| SUBSTANCE OF MEASUREMENT | HAZARDOUS SUBSTANCE DISSOLUTION TEST THE METHOD DEFINED BY NOTIFICATION NO. 13 OF THE ENVIRONMENT AGENCY | | |
|---|---|---|---|
| SUBJECT OF MEASUREMENT | MEASURING RESULT (mg/ℓ) | QUANTITATIVE LIMIT (mg/ℓ) | MEASURING METHOD |
| Pb | N·D | 0.05 | JIS K0102   54-2 |
| Cd | N·D | 0.01 | 55-2 |
| $Cr^{+6}$ | N·D | 0.05 | 65-2-2 |
| CN | N·D | 0.02 | 38-2 |
| Ag | N·D | 0.02 | 61-1 |
| T-Hg | N·D | 0.0005 | THE METHOD SHOWN IN ATTACHED TABLE 3 OF NOTIFICATION NO. 59 |
| TO BE BLANKED | | | |

NOTE : N·D MEANS "NOT DETECTED"

## FIG. 3(d)

80% ASH MIXED FIRED PRODUCT

| SUBSTANCE OF MEASUREMENT | HAZARDOUS SUBSTANCE DISSOLUTION TEST THE METHOD DEFINED BY NOTIFICATION NO. 13 OF THE ENVIRONMENT AGENCY | | |
|---|---|---|---|
| SUBJECT OF MEASUREMENT | MEASURING RESULT (mg/ℓ) | QUANTITATIVE LIMIT (mg/ℓ) | MEASURING METHOD |
| Pb | N·D | 0.05 | JIS K0102   54-2 |
| Cd | N·D | 0.01 | 55-2 |
| $Cr^{+6}$ | N·D | 0.05 | 65-2-2 |
| CN | N·D | 0.02 | 38-2 |
| Ag | N·D | 0.02 | 61-1 |
| T-Hg | N·D | 0.0005 | THE METHOD SHOWN IN ATTACHED TABLE 3 OF NOTIFICATION NO. 59 |
| TO BE BLANKED | | | |

NOTE : N·D MEANS "NOT DETECTED"

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | GB-A- 286 772 (G.H. HADFIELD) <br> * Column 1, lines 46-49; claim 1 * | 1 | C 04 B 33/04 <br> C 04 B 33/13 <br> C 04 B 18/02 |
| X | CHEMICAL ABSTRACTS, vol. 107, no. 20, November 1987, page 383, abstract no. 182042y, Columbus, Ohio, US; JP-A-62 176 951 (FUJIMI TITE CO. LTD) <br> * Abstract * | 1 | |
| Y | IDEM | 2 | |
| Y | WO-A-8 802 284 (NEUTRALYSIS INDUSTRIES PTY., LTD) <br> * Page 5, line 5 - page 7, line 2; figure 1; page 1, lines 9-13 * | 2 | |
| A | CHEMICAL ABSTRACTS, vol. 98, no. 22, 1983, page 312, abstract no. 184628p, Columbus, Ohio, US; & JP-A-57 200 259 (DAIDO STEEL CO. LTD) <br> * Abstract * | 1,2 | TECHNICAL FIELDS SEARCHED (Int. Cl.5) |
| A | GB-A- 7 002 (G. HIDOUX et al.) | | C 04 B 33 <br> C 04 B 18 |

The present search report has been drawn up for all claims

| Place of search | Date of completion of the search | Examiner |
|---|---|---|
| THE HAGUE | 03-04-1990 | HARBRON J.L. |

EPO FORM 1503 03.82 (P0401)